# EUROPEAN PATENT SPECIFICATION

(11) **EP 1 929 428 B1**
(45) Date of publication and mention of the grant of the patent: **01.06.2011**
(21) Application number: 06814984.8
(22) Date of filing: 19.09.2006
(51) Int. Cl.: G06K 7/00

(54) **AUTOMATIC DATA COLLECTION DEVICE, METHOD AND ARTICLE FOR AVOIDING INTERFERENCE**
AUTOMATISCHE DATENERFASSUNGSVORRICHTUNG, VERFAHREN UND ARTIKEL ZUM VERHINDERN VON INTERFERENZEN
DISPOSITIF DE COLLECTE DE DONNEES AUTOMATIQUE, PROCEDE ET ARTICLE POUR EVITER L'INTERFERENCE

(30) Priority: 22.09.2005 US 719344 P; 23.12.2005 US 318267
(43) Date of publication of application: 11.06.2008
(73) Proprietor: Intermec IP Corp., Everett, WA 98203 (US)
(72) Inventor: WITHERSPOON, Adrian, Bothell, Washington 98012 (US); MARTINEZ, Rene, Seattle, Washington 98105 (US)
(74) Representative: Grünecker, Kinkeldey, Stockmair & Schwanhäusser Anwaltssozietät
(86) International application number: PCT/US2006/036558
(87) International publication number: WO 2007/038106

(56) References cited:
- EP-A1- 0 994 364
- EP-A2- 0 596 521
- EP-A2- 0 797 332
- US-A1- 2005 093 679

## Description

This disclosure generally relates to automatic data collection (ADC) and more particularly to radio-frequency identification.

The ADC field is generally directed to the use of devices and methods for automatically capturing data typically encoded in media such as a machine-readable symbol or tag carried by the item to which the data relates. A variety of ADC devices and ADC media are ubiquitous and well known.

For example, a data carrier may take the form of a radio-frequency identification (RFID) tag, which may take the form of a card. Such tags typically include an RFID substrate carrying a circuitry such as a semiconductor device including memory and one or more conductive traces that form an antenna. Typically, RFID tags act as transponders, providing information stored in the semiconductor device in response to a radio-frequency (RF) signal, commonly referred to as an interrogation signal, received at the antenna from a reader or interrogator. Some RFID tags include security measures, such as passwords and/or encryption. Many RFID tags also permit information to be written or stored in the semiconductor memory via an RF signal. Radio-frequency communications include communications in any frequency band or range suitable for wireless communications, including those commonly referred to as the radio wavelength and the microwave wavelength portions of the electromagnetic spectrum.

RFID tags that include a discrete power source, for example a battery, are commonly referred to as active devices. RFID devices that rely on an RF signal to derive power are commonly referred to as passive devices, which typically employ modulation backscatter techniques. RFID tags may employ both active and passive power sources.

Identification of an RFID device or tag generally depends on RF energy produced by a reader or interrogator arriving at the RFID tag and returning to the interrogator. Multiple protocols exist for use with RFID tags. These protocols may specify, among other things, particular frequency ranges, frequency channels, modulation schemes, security schemes, and data formats.

Other radio-frequency devices, such as, for example, telephone and other communication systems, control systems, and other ADC devices, including additional RFID systems, may share frequency channels within a frequency band. This can lead to interference between devices. For example, performance of an RFID device can be degraded due to interference from another device, or operation of an RFID device may degrade the performance of another device. Conventional systems avoid interference by having a reader listen or check for existing traffic within a frequency channel prior to broadcasting an interrogation signal. If a signal above a threshold energy level is detected in a frequency channel, the reader is configured to not transmit an interrogation signal in that frequency channel. See, e.g., European Telecommunications Standard Institute EN 302 208. Devices may also employ other techniques to share communications frequencies, such as switching channels periodically, alone or in combination with listening for other traffic on a frequency channel prior to transmitting an interrogation signal in that frequency channel.

Recent regulatory changes have allowed RFID devices, including RFID tags and readers, to increase the power level of the interrogation and/or response signals. For example, in Europe, RFID devices were previously restricted in one example frequency channel to transmitting a signal with an effective radiated energy level of up to 0.5 watts. Under the new regulations, RFID devices may transmit a signal with an effective radiated energy of up to 2 watts in a similar frequency channel. This increased power, however, increases the risk of interfering with the operation of other nearby radio-frequency devices, including other RFID devices. Conventionally, this is addressed by lowering the threshold energy level in a frequency channel above which an RFID reader will not transmit an interrogation signal in that channel.

From reference EP 0 994 364 an interrogation device for reading the data stored in a transponder is known. For reading the data stored in the transponder, the conventional interrogation device first receives the background noise for the purpose of detecting interference frequencies present in this background noise. On the basis of the interference frequencies acquired, coefficients for an adaptive filter are computed by means of which this filter may be tuned in such a way as to suppress the interference frequencies. The response signal from the transponder with the superimposed background noise is received by the interrogation device and routed through the adaptive filter which acts to suppress the interference frequencies. The signal available at the output of the filter can then be demodulated for the purpose of reading the data stored. In the presence of interferences from other RFID readers, however, even with this filter, it cannot be guaranteed that the data can successfully be read.

Reference EP 0 596 521 discloses a multi-interrogator transponder arrangement. The transponder arrangement comprises a first interrogation unit comprising a first wireless datacom transceiver which transmits at least one RF interrogation signal. The arrangement also comprises a second interrogation unit comprising a second wireless datacom transceiver which is in wireless communication with the first wireless datacom transceiver. The arrangement still further comprises a responder unit which upon receipt of the RF interrogation signal transmits data stored therein back to the first interrogation unit in the form of a responsive RF communication, the responder unit comprising a responder unit energy accumulator which stores energy contained in the RF interrogation signal. According to this reference, interrogators use listen-before-talk, before sending a signal on a channel. If a transmission is detected in a common carrier frequency, the carrier frequency is simply not used. This is not the most efficient manner for employing limited transmission resources.

Reference US 2005/093679 discloses a system which includes a large-zone RFID reader, a plurality of small-zone RFID readers, and a plurality of RFID tags. The large-zone RFID reader covers areas which are not covered by the small-zone RFID readers. The output power of the small-zone RFID readers is controlled by the large-zone RFID reader based on RFID tag operation patterns of the small-zone RFID readers. The system reliability is improved by a method that uses reliable RFID tags, RFID reader beacon signals, and RFID tag's repetitive transmitting signals to detect tag failures. Specifically, the small zone readers use the large zone reader beacon signal as a reference, as well as detected beacon signals from other small zone readers, to offset their beacon timing. This results in a complex and costly system.

Reference EP 0797332 discloses a packet data transmission system which is used to link a number of remote hand-held data-gathering units such as bar code readers to a central computer which maintains a database management system. Data packets are sent from the remote units by an RF link to intermediate base stations, then sent by the base stations to the central computer by a serial link. Direct sequence spread spectrum modulation is used for the RF link. The base station switches through all the available frequency channels to detect the least interference or the quietest channel which is then used for further communication. The remote hand-held units initiate an exchange using RF transmission to and from the base stations, receiving only during a rigid time window following a transmission from the remote unit. The base stations cannot initiate communication to the remote units, but instead send data to the remote units only as part of the exchange. The use of rigid time windows for communication, however, leads to a complex system with limited flexibility.

It is thus an aim of the present invention to provide an improved radio-frequency interrogator and a corresponding method that overcome the above-mentioned problems.

This is achieved by the features of the independent claims 1 and 13. Preferred embodiments are subject matter of the dependent claims.

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn are not necessarily intended to convey any information regarding the actual shape of particular elements, and have been selected solely for ease of recognition in the drawings.
Figure 1 is a functional block diagram of an embodiment of a radio-frequency identification system.
Figure 2 is functional block diagram of an embodiment of a radio frequency interrogator.
Figure 3 is functional block diagram of an embodiment of a receiving section of a radio-frequency interrogator.
Figure 4 is an illustration of potential interference paths when a radio-frequency identification system is operated in proximity with another radio-frequency identification system.
Figure 5 is a high-level flow diagram illustrating an embodiment of a method of operating a radio-frequency identification system.
Figure 6 is a high-level flow diagram illustrating another embodiment of a method of operating a radio-frequency identification system.
Figure 7 is a mid-level flow diagram illustrating an embodiment of a method of operating a radio-frequency identification system.
Figure 8 is a mid-level flow diagram illustrating another embodiment of a method of operating a radio-frequency identification system.
Figure 9 is a mid-level flow diagram illustrating an embodiment of a method of determining whether a signal is a radio-frequency identification signal.
Figure 10 is a graphical representation of amplitude modulation of a radio-frequency signal.
Figure 11 is a graphical representation of power strength indicator for the signal illustrated in Figure 10.
Figure 12 is a graphical representation of an amplitude modulation indicator for the signal illustrated in Figure 10.
Figure 13 is a graphical representation of an interrogation signal from a radio-frequency interrogator.
Figure 14 is a graphical representation of another interrogation signal from a radio-frequency interrogator.

In the following description, certain details are set forth in order to provide a thorough understanding of various embodiments of devices, methods and articles. However, one of skill in the art will understand that other embodiments may be practiced without these details. In other instances, well-known structures and methods associated with RFID tags, RFID readers or interrogators, substrates, semiconductor devices, RF signals, and antennas have not been shown or described in detail to avoid unnecessarily obscuring descriptions of the embodiments.

Unless the context requires otherwise, throughout the specification and claims which follow, the word "comprise" and variations thereof, such as "comprising," and "comprises," are to be construed in an open, inclusive sense, that is as "including, but not limited to."

Reference throughout this specification to "one embodiment," or "an embodiment" means that a particular feature, structure or characteristic described in connection with the embodiment is included in at least one embodiment. Thus, the appearances of the phases "in one embodiment," or "in an embodiment" in various places throughout this specification are not necessarily referring to the same embodiment, or to all embodiments. Furthermore, the particular features, structures, or characteristics may be combined in any suitable manner in one or more embodiments to obtain further embodiments.

The headings are provided for convenience only, and do not interpret the scope or meaning of this disclosure or the claimed invention.

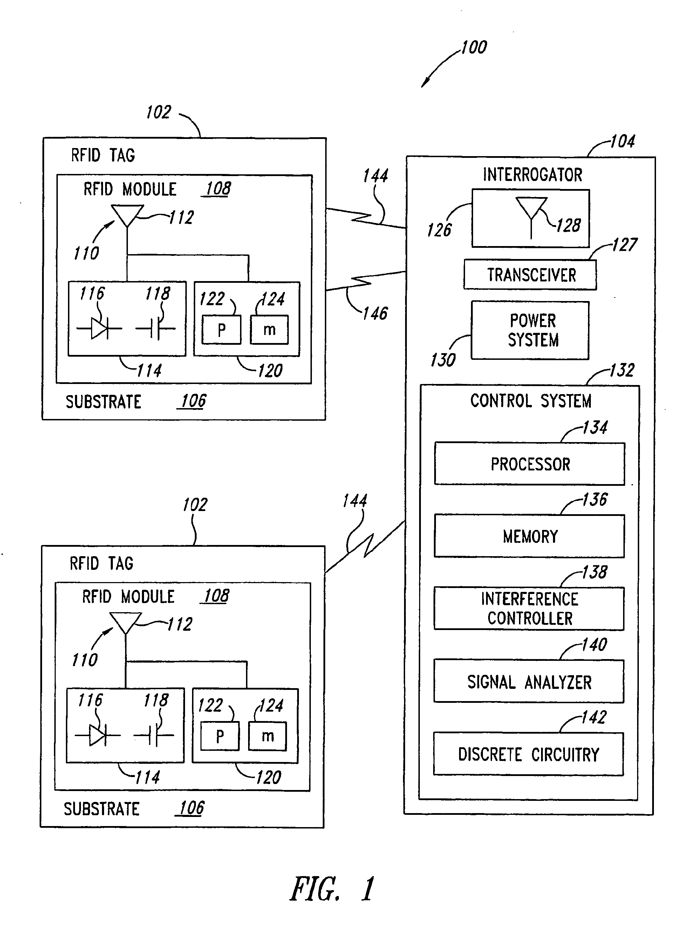

Figure 1 is a functional block diagram of an RFID system 100 comprising a plurality of RFID transponders or tags 102 and a reader or interrogator 104. Each RFID tag 102 as illustrated comprises an RFID substrate 106 comprising an RFID device or module 108. The RFID tags 102 may take the form of a card, a laminated substrate, and/or a housing.

The RFID devices 108 as illustrated comprise an antenna system 110, which as illustrated comprises an antenna 112, a power system 114, which as illustrated comprises an optional rectifier 116 and an optional battery 118, and a data system 120, which as illustrated comprises a processor 122 and a memory 124. The antenna system 110 sends and receives radio-frequency signals and may comprise multiple antennas, multiple antenna arms, and parasitic elements. The power system 114 provides power to the RFID device 108 and may be configured to provide power in a passive and/or an active manner. The data system 120 is configured to generate output signals in response to signals received from the antenna system 110. In some embodiments, the data system 120 may comprise discrete circuitry in addition to, or instead of, the illustrated processor 122 and/or the memory 124.

The interrogator 104 as illustrated comprises an antenna system 126, which as illustrated comprises an antenna 128, a transceiver 127, a power system 130, and a control system 132, which as illustrated comprises a processor 134, a memory 136, an interference controller 138, a signal analyzer 140, and discrete circuitry 142. The antenna system 126 sends and receives radio-frequency signals and may comprise multiple antennas, multiple antenna arms, and parasitic elements. The transceiver 127 transmits interrogation signals and receives signals, such as signals from the RFID tags 102. The power system 130 provides power to the interrogator 104. The control system 132 controls operation of the interrogator 104 so as to reduce the likelihood that operation of the RFID system 100 will result in interference due to the use of one or more frequency channels by other devices or systems. The interference controller 138 is configured to control operation of the interrogator 104 based at least in part on indications received from the signal analyzer 140, as discussed in more detail below. In some embodiments, the control system 132 may comprise discrete circuitry 142 in addition to, or instead of, the illustrated processor 134, the memory 136, the interference controller 138 and the signal analyzer 140.

In one mode of operation, the RFID interrogator 104 queries (i.e., interrogates) one or more RFID tags 102 with a wireless signal, such as an electromagnetic signal. In the embodiment as illustrated, the RFID interrogator 104 broadcasts an RF interrogation signal 144. The RF interrogation signal 144 may be modulated to carry data, instructions or commands. In response to the interrogation signal 144, one or more of the RFID tags 102 may respond to the interrogation signal 144 with a response signal. As illustrated in Figure 1, one of the RFID tags 102 responds to the interrogation signal with a response signal 146. The response signal 146 may be, for example, a modulation backscatter signal.

The control system 132 may be implemented in a variety of ways, including as separate subsystems. The control system 132 may be implemented as a microprocessor, a digital signal processor (DSP), an application-specific integrated circuit (ASIC), or the like, or as a series of instructions stored in a memory, such as the memory 136 and executed by a controller, such as the processor 134, or various combinations of the above. Thus, software modifications to existing hardware may allow the implementation of the control system 132. Various subsystems, such as the interference controller 138 and the signal analyzer 140, are identified as separate blocks in the functional block diagram of Figure 1 because they perform specific functions that will be described in more detail below. These subsystems may be discrete units. For example, the interference controller 138 may be implemented with a discrete circuit. The subsystems also may not be discrete units but may be functions of a software routine, which will probably, but not necessarily, be separately callable and hence identifiable elements. The various subsystems may be combined. For example, all or portions of the signal analyzer 140 may be integrated into the interference controller 138.

While the illustrated embodiment denotes a single processor 134, other embodiments may comprise multiple processors. The memory 136 may comprise, for example, registers, read only memory ("ROM"), random access memory ("RAM"), flash memory and/or electronically erasable programmable read only memory ("EEPROM"), and may provide instructions and data for use by the control system 132.

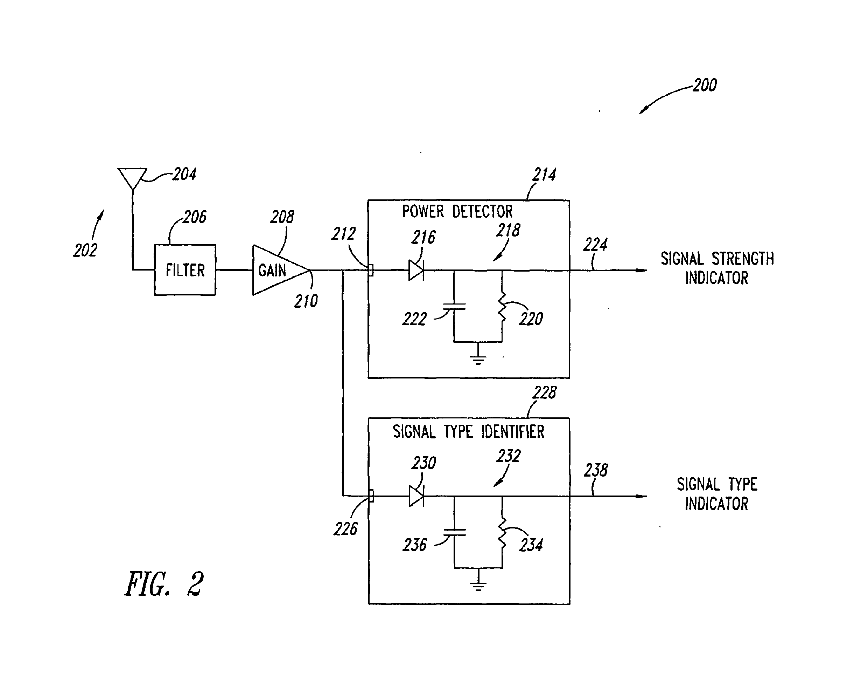

Figure 2 is a functional block diagram of an embodiment of a radio-frequency interrogator 200 configured to employ the present methods of avoiding interference with other radio-frequency devices. The interrogator 200 comprises an antenna system 202, which as illustrated comprises an antenna 204. The antenna system 202 is coupled to a filter 206 that is configured to select a desired frequency. The filter 206 is coupled to an amplifier 208 that is configured to boost weak signals.

An output 210 of the amplifier 208 is coupled to an input 212 of a power detector 214, which as illustrated comprises a rectifier 216 and an RC circuit 218. The RC circuit 218 comprises a resistor 220 having a resistance R1 and a capacitor 222 having a capacitance C1. An output 224 of the power detector 214 provides an indicator of a strength of a signal.

The output 210 of the amplifier 208 is coupled to an input 226 of a signal type identifier 228, which as illustrated comprises a rectifier 230 and an RC circuit 232. The RC circuit 232 comprises a resistor 234 having a resistance R2 and a capacitor 236 having a capacitance C2. An output 238 of the signal type identifier 228 provides an indicator of a type of a signal. The components of the power detector 214 and the signal type identifier 228 may be selected to produce the desired output signal. For example, the time constants of the respective RC circuits 218, 232 may be different. For example, the product C1*R1 may be much greater than the product C2*R2.

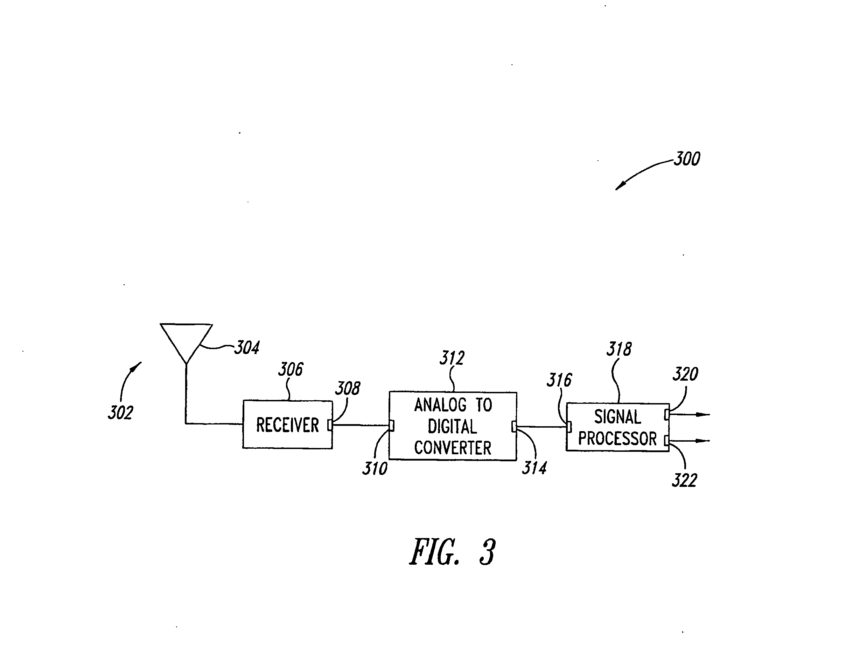

Figure 3 is a functional block diagram of an embodiment of a receiving section of a radio-frequency interrogator 300 configured to employ the present methods of avoiding interference with other radio-frequency devices. The interrogator 300 comprises an antenna system 302, which as illustrated comprises an antenna 304. The antenna system 302 is coupled to a receiver 306 that is configured to radio frequency singles in one or more frequency channels. An output 308 of the receiver 306 is coupled to an input 310 of an analog-to-digital converter 312 that is configured to convert one or more received analog signals into digital signals. An output 314 of the analog-to-digital converter 312 is coupled to an input 316 of a signal processor 318 that is configured to analyze the digital signals. The signal processor 318 may be implemented with, for example, a digital signal processor, hardware logic, or combinations thereof. The signal processor 318 has one or more outputs 320, 322 that provide control signals indicative of characteristics of a received signal, such as a power level of a received signal and/or an indication of a nature or type of a received signal. For example, an indication of whether the received signal is from another interrogator.

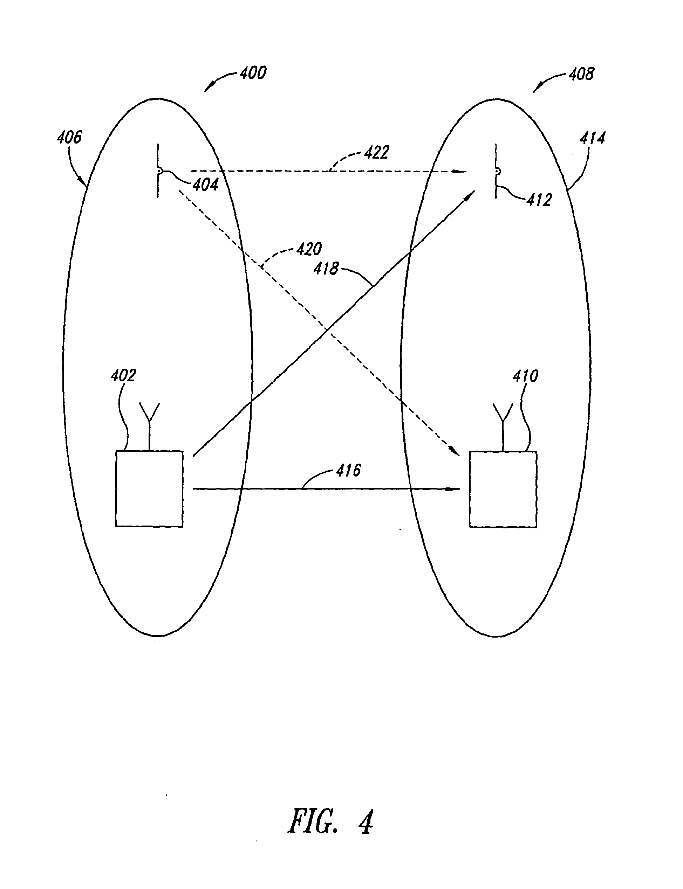

Figure 4 is a diagram illustrating example interference paths for interference caused by multiple RFID devices using channels within a frequency band. Interference may occur when RFID devices in proximity with each other use the same channel, or when RFID devices in proximity with each use channels in proximity with each other. A first RFID system 400 comprises an interrogator 402 and an RFID tag 404. The first RFID system 400 has a reading area 406. A second RFID system 408 comprises an interrogator 410 and an RFID tag 412. The second RFID system 408 has a reading area 414. A signal from the interrogator 402 of the first RFID system 400 may interfere with the operation of the interrogator 410 of the second RFID system 408, as illustrated by the solid line 416. A signal from the interrogator 402 of the first RFID system 400 may interfere with the operation of the RFID tag 412 of the second RFID system 408, as illustrated by the solid line 418. A signal from the RFID tag 404 of the first RFID system 400 may interfere with the operation of the interrogator 410 of the second RFI D system 408, as illustrated by the dashed line 420. A signal from the RFID tag 404 of the first RFID system 400 may interfere with the operation of the RFID tag 412 of the second RFID system 408, as illustrated by the dashed line 422.

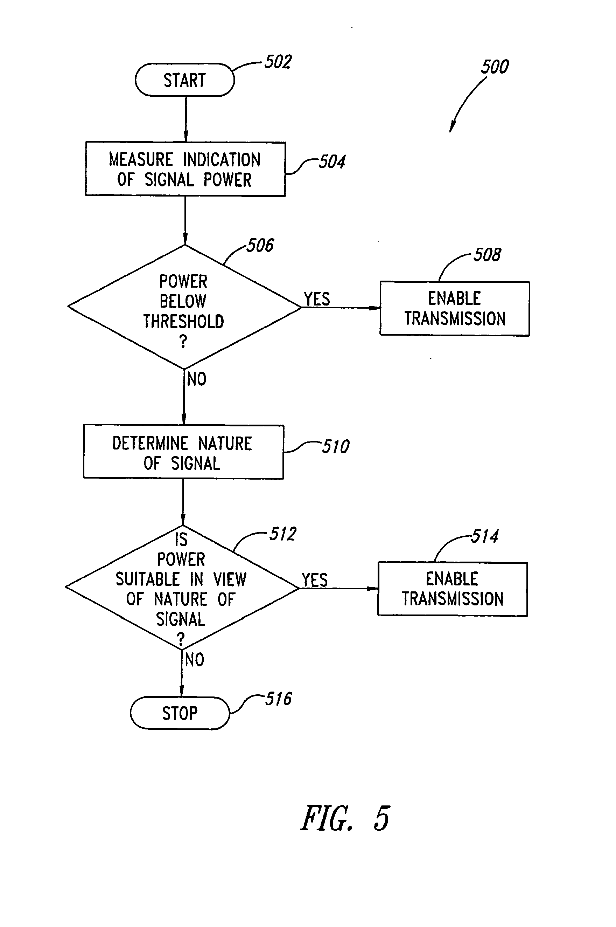

Figure 5 is a high level flow diagram illustrating an embodiment of a method 500 of determining whether to enable an RFID system, such as the RFID system 100 illustrated in Figure 1, to transmit an interrogation signal in a selected frequency channel. The method 500 starts at 502 and proceeds to 504.

At 504, the system 100 measures an indication of signal power. This may be done, for example, by using a power detector as illustrated in Figure 2 or by using a signal processor as illustrated in Figure 3. The method 500 proceeds from 504 to 506. At 506, the system 100 determines whether the power level in the signal is below a threshold power level.

When it is determined at 506 that the power level in the signal is below a threshold power level, the method 500 proceeds from 506 to 508. At 508, the system 100 enables transmission of an interrogation signal in the frequency channel, and the method 500 terminates. When it is determined at 506 that the power level in the signal is not below a threshold, the method 500 proceeds from 506 to 510.

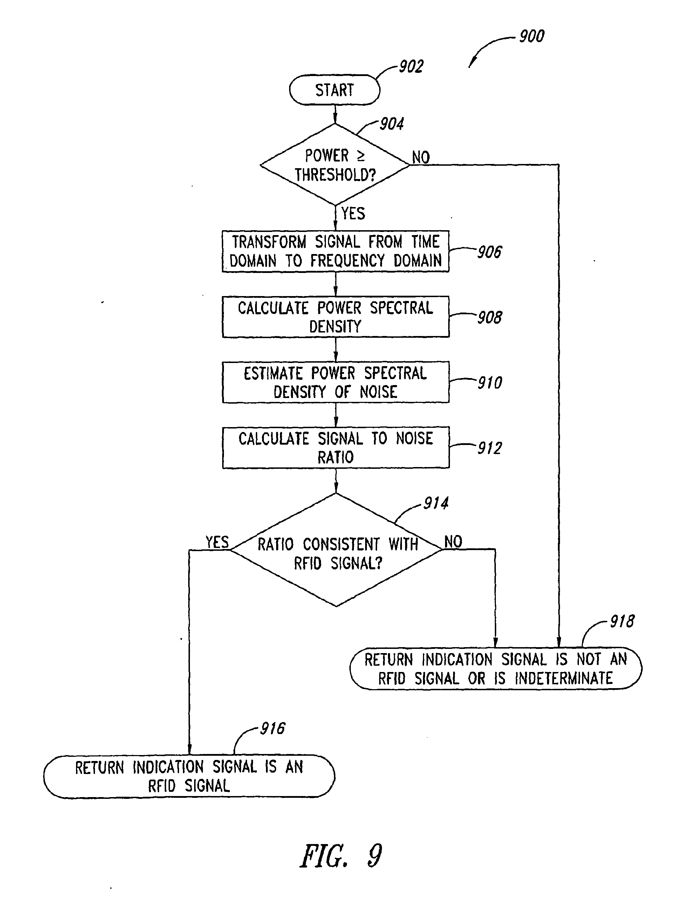

At 510, the system 100 determines the nature of the signal. This may be done, for example, by determining whether the signal employs amplitude modulation, which may be done, for example, by using the signal type identifier 228 illustrated in Figure 2 or the signal processor 318 illustrated in Figure 3. This may also be done, for example, by determining whether the signal is using angle modulation (i.e., frequency or phase modulation). In another example, this may be done by extracting data from the signal. For example, an identification code may be embedded in the signal, or the type of data contained in the signal may indicate the nature of the signal. The method illustrated in Figure 9 below may be employed to determine whether the signal is from another RFID device, such as an RFID interrogator. The method 500 proceeds from 510 to 512.

At 512, the system 100 determines whether to enable transmission in the selected frequency channel based on the nature of the signal and the power of the signal. For example, the system 100 may be configured to enable transmission if the detected signal employs amplitude modulation. In another example, the system 100 may be configured to enable transmission if the detect signal employs amplitude modulation and the power level is below a second, higher, threshold level.

When the system 100 determines at 512 to enable transmission in the selected frequency channel, the method 500 proceeds from 512 to 514. At 514, the system 100 enables transmission of an interrogation signal in the frequency channel, and the method 500 terminates. When the system determines at 512 not to enable transmission of an interrogation signal in the frequency channel, the method proceeds from 512 to 516. At 516, the method 500 terminates.

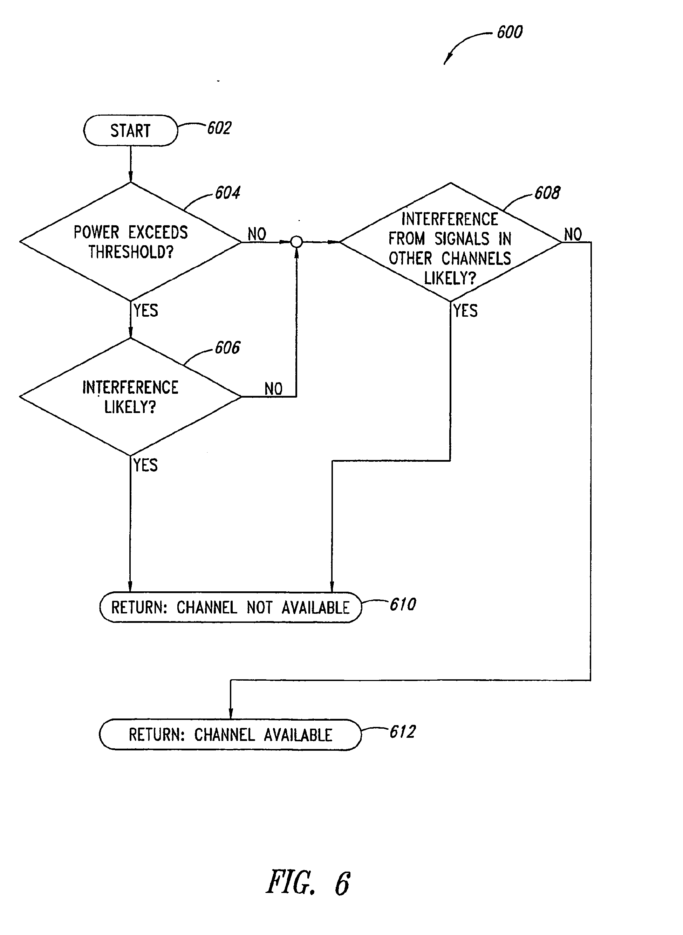

Figure 6 is a high level flow diagram illustrating another embodiment of a method 600 of determining whether to enable an RFID system, such as the RFID system 100 illustrated in Figure 1, to transmit an interrogation signal in a selected frequency channel. The method 600 starts at 602 and proceeds to 604.

At 604, the system 100 determines whether there is a signal in the selected frequency channel with a power level that exceeds a threshold power level. This may be done, for example, by using a power detector as illustrated in Figure 2 or by using a signal processor as illustrated in Figure 3 to generate control signals indicative of the power level of a signal. When it is determined at 604 that the power level of a signal present in the selected frequency channel exceeds a threshold power level, the method 600 proceeds from 604 to 606. When it is determined at 604 that the power level of a signal present in the selected frequency channel does not exceed a threshold power level, the method 600 proceeds from 604 to 608.

At 606, the system 100 determines whether interference with the signal in the selected frequency channel is likely. This may be done, for example, by determining whether the signal is from another RFID system, and, if so, whether the power level exceeds a second, higher, threshold level. A look-up table may be employed to determine whether interference is likely. When it is determined at 606 that interference with the signal in the selected channel is not likely, the method 600 proceeds from 606 to 608. When it is determined at 606 that interference is likely, the method 600 proceeds from 606 to 610.

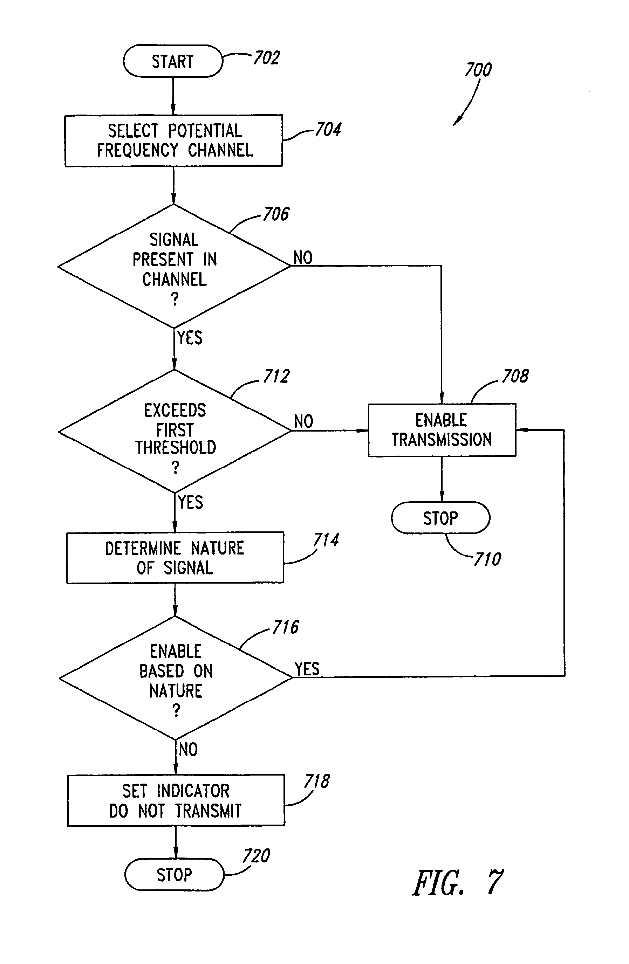

At 608, the system 100 determines whether interference with signals in one or more other frequency channels is likely. This may be done, for example, by determining whether the power levels of signals in other frequency channels exceed a threshold level for such signals. In another example, the methods illustrated in Figures 5 and 7 may be modified to determine whether interference between a signal in the selected frequency channel and a signal in another frequency channel is likely to occur if transmission is enabled. The other frequency channels to be checked may include, for example, all frequency channels within a certain range of the selected frequency. For example, all frequency channels with in 1 MHz of the channel may be checked. In another example, adjacent frequency channels may be checked. In another example, channels that are known to have signals that can result in interference with signals in the selected frequency channel may be checked.

When it is determined at 608 that interference with signals in other frequency channels is likely, the method 600 proceeds from 608 to 610. When it is determined at 608 that interference with signals in other frequency channels is not likely, the method 600 proceeds from 608 to 612. At 610, the system 100 returns an indication that the selected channel is not available and the method 600 terminates. At 612, the system 100 enables transmission in the selected channel and the method 600 terminates.

Figure 7 is a mid-level flow diagram illustrating an embodiment of a method 700 of determining whether an RFID system, such as the RFID system 100 illustrated in Figure 1, is free to transmit an interrogation signal in a selected frequency channel. The method 700 starts at 702 and proceeds to 704.

At 704, the system 100 selects a potential frequency channel on which to transmit an interrogation signal, such as the interrogation signal 144 illustrated in Figure 1. A potential frequency may be selected, for example, by using a random number generator (not shown) or a look-up table stored in a memory, such as the memory 136 illustrated in Figure 1. The method 700 proceeds from 704 to 706.

At 706, the system 100 determines whether a radio-frequency signal is present in the selected frequency channel. This may be done, for example, by determining whether detectable power in the selected radio-frequency channel exceeds a first threshold power level. This first threshold power level may be selected, for example, in accordance with design requirements, regulatory requirements, experience, and/or various combinations of the above. The first threshold power level may be different for different frequency channels and/or operational conditions.

If the system 100 determines at 706 that no radio-frequency signal is present in the selected frequency channel, the method 700 proceeds from 706 to 708. At 708, the system 100 sets an indication that the interrogator 104 may use the selected frequency channel to transmit an interrogation signal. The method 700 proceeds from 708 to 710, where the method terminates.

If the system 100 determines at 706 that a radio-frequency signal is present in the selected frequency channel, the method proceeds from 706 to 712. At 712, the system 100 determines whether a power level of the radio-frequency signal present in the selected frequency channel exceeds a second threshold power level. This second threshold power level may be selected, for example, in accordance with design requirements, regulatory requirements, experience, and/or various combinations of the above, and may be different for different frequency channels and/or operational conditions.

If the system 100 determines at 712 that the power level of the radio-frequency signal present in the selected frequency channel does not exceed the second threshold power level, the method 700 proceeds from 712 to 708. At 708, the system 100 sets an indication that the interrogator 104 may use the selected frequency channel to transmit an interrogation signal. The method 700 proceeds from 708 to 710, where the method 700 terminates.

If the system 100 determines at 712 that the power level of the radio-frequency signal present in the selected frequency channel exceeds the second threshold power level, the method 700 proceeds from 712 to 714.

At 714, the system 100 determines the nature of the signal present in the selected frequency channel. For example, the system 100 may determine the type or source of the signal present in the selected frequency channel. This may be done, for example, by determining whether certain features are present in the signal and/or by measuring features of the signal present in the selected frequency channel. For example, the system may look for a feature that is present in signals of a particular type, such as a code transmitted by an RFID interrogator. In another example, the system 100 may determine whether the signal employs amplitude and/or angular modulation. A look-up table stored in a memory, such as the memory 136, may be employed to determine the nature of the signal present in the selected frequency channel. The system 100 may be configured to make a binary determination of whether a characteristic is present in the signal. For example, the system 100 may be configured to determine whether or not the signal present in the selected frequency channel is from another RFID interrogator. In an alternative example, the system 100 may be configured to determine whether the signal is one of a plurality of types of signals. The method 700 proceeds from 714 to 716.

At 716, the system 100 determines, based at least in part on the nature of the signal present in the selected frequency channel, whether to enable transmission of an interrogation signal by the interrogator 104. This may be done, for example, by determining whether the power level of the signal present in the selected frequency channel exceeds a third threshold power level. This third threshold power level may be selected, for example, in accordance with design requirements, regulatory requirements, experience, and/or various combinations of the above, and may be different for different frequency channels, types of signals and/or operational conditions. For example, if the signal present in the selected frequency channel is from another interrogator, the system 100 may determine whether the power level exceeds a defined interrogator on interrogator interference limit, which may be higher than the second threshold power level. In another example, the system 100 may be configured to enable transmission when it is determined that the signal is of a particular nature. For example, if the signal is determined to be from another interrogator, or from another interrogator of a particular type, the system 100 may be configured to always enable transmission.

If the system determines at 716 to enable transmission, the method proceeds from 716 to 708. At 708, the system 100 sets an indication that the interrogator 104 may use the selected frequency channel to transmit an interrogation signal. The method 700 proceeds from 708 to 710, where the method 700 terminates.

If the system determines at 716 not to enable transmission, the method 700 proceeds from 716 to 718. At 718, the system 100 sets an indication that the selected frequency channel may not currently be used to transmit an interrogation signal. The method 700 proceeds from 718 to 720, where the method 700 terminates.

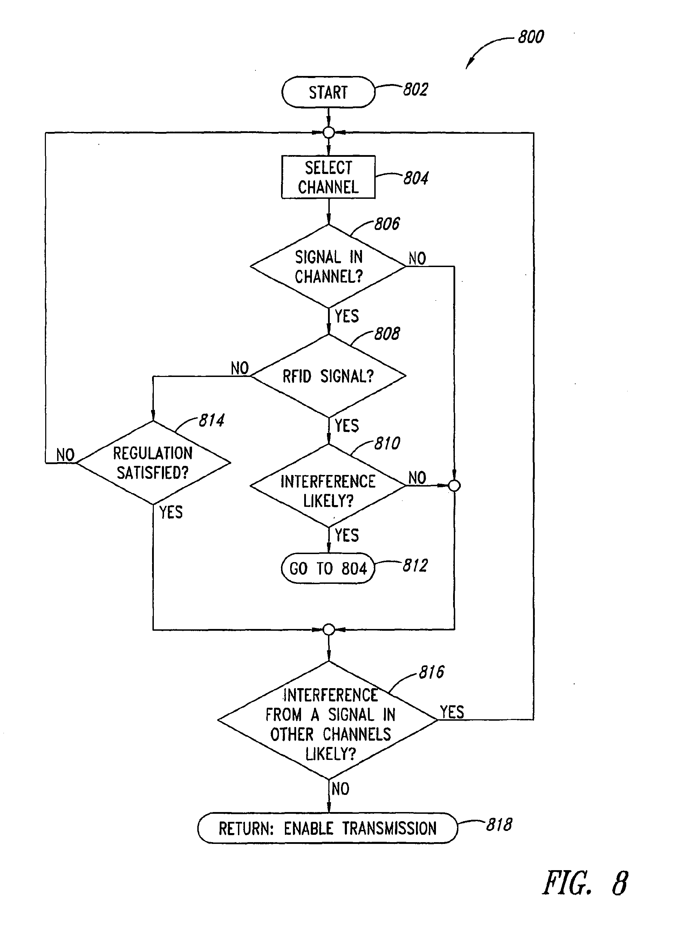

Figure 8 is mid-level flow diagram illustrating an embodiment of a method 800 of selecting a transmission channel for an RFID system, such as the RFID system 100 illustrated in Figure 1. The method 800 starts at 802 and proceeds to 804.

At 804, the system 100 selects a potential frequency channel on which to transmit an interrogation signal, such as the interrogation signal 144 illustrated in Figure 1. A potential frequency may be selected, for example, by using a random number generator (not shown) or a look-up table stored in a memory, such as the memory 136 illustrated in Figure 1. A potential frequency channel may be selected based in part on previously selected potential frequency channels. For example, the system 100 may have recently determined that a potential frequency channel was not available or that a signal was present in a potential frequency channel. In such a case, the system 100 may be configured to select another potential frequency channel. The method 800 proceeds from 804 to 806.

At 806, the system 100 determines whether a radio-frequency signal is present in the selected frequency channel. This may be done, for example, by determining whether detectable power in the selected radio-frequency channel exceeds a first threshold power level. This first threshold power level may be selected, for example, in accordance with design requirements, regulatory requirements, experience, and/or various combinations of the above. The first threshold power level may be different for different frequency channels and/or operational conditions.

When the system 100 determines at 806 that a radio-frequency signal is present in the selected frequency channel, the method 800 proceeds from 806 to 808. When the system 100 determines at 806 that a radio-frequency signal is not present in the selected frequency channel, the method 800 proceeds from 806 to 816.

At 808, the system 100 determines whether the signal in the selected frequency channel is an RFID signal; for example, whether the signal is from an interrogator or an RFID tag. The system 100 may employ, for example, the method illustrated in Figure 9, below, to determine whether the signal is from another RFID device. This may be done, for example, by using the signal type identifier 228 illustrated in Figure 2 or the signal processor 318 illustrated in Figure 3. This may also be done, for example, by determining whether the signal is using angle modulation (*i.e*., frequency or phase modulation). In another example, this may be done by extracting data from the signal. For example, an identification code may be embedded in the signal, or the type of data contained in the signal may indicate the nature of the signal. When it is determined at 808 that the signal in the selected frequency channel is an RFID signal, the method 800 proceeds from 808 to 810. When it is determined at 808 that the signal in the selected frequency channel is not an RFID signal, the method 800 proceeds from 808 to 814.

At 810, the system 100 determines whether interference is likely to occur between the RFID signal present in the selected frequency channel and an RFID signal transmitted by the system 100. When it is determined at 810 that interference is likely to occur, the method 800 proceeds from 810 to 812, and returns to 804, where another potential frequency channel is selected. When it is determined at 810 that interference is not likely to occur, the method 800 proceeds from 810 to 816.

At 814, the system 100 determines whether regulatory requirements for transmitting RFID signal in a channel with a non-RFID signal present are satisfied. For example, the system 100 may determine whether the power level of the non-RFID signal is below a threshold level, such as -96 dBm. When it is determined at 814 that the regulatory requirements are satisfied, the method 800 proceeds to 816. When it is determined at 814 that the regulatory requirements are not satisfied, the method 800 returns to 804, where another potential frequency channel is selected.

At 816, the system 100 determines whether interference from signals in one or more other channels is likely. This may be done, for example, by determining whether the power levels of signals in other frequency channels exceed a threshold level for such signals. In another example, the methods illustrated in Figures 5 and 7 may be modified to determine whether interference between a signal in the selected frequency channel and a signal in another frequency channel is likely to occur if transmission in the selected frequency channel is enabled. The other frequency channels to be checked may include, for example, all frequency channels within a certain range of the selected frequency. For example, all frequency channels with in 1 MHz of the channel may be checked. In another example, adjacent frequency channels may be checked. In another example, channels that are known to have signals that can result in interference with signals in the selected frequency channel may be checked.

When the system 100 determines at 816 that interference with a signal in another frequency channel is likely to occur if transmission in the selected frequency channel is enable, the method 800 proceeds from 816 to 804, where another potential frequency channel is selected. When it is determined at 816 that interference with a signal in another frequency channel is not likely to occur, the method 800 proceeds from 816 to 818. At 818, the system returns an indication that the selected frequency channel is available for use by the RFID system 100.

Figure 9 is a mid-level flow chart illustrating a method 900 of determining whether a signal present in a channel is an RFID signal, such as a signal from another interrogator or RFID tag, that may be employed by an RFID system, such as the RFID system 100 illustrated in Figure 1. The method 900 starts at 902 and proceeds to 904.

At 904, the system 100 determines whether the power level of the signal is above a threshold energy level. For example, it may be difficult to determine whether a signal is an RFID signal if the power level of the signal is below the threshold. The particular threshold selected may depend, for example, on the type of RFID signal that is of concern, such as a signal from another interrogator, or an interrogator of a particular type, or the operating conditions for the RFID system 100. For example, some interrogator signals are difficult to detect when the power level is below -94 dBm, and easy to detect when the power level is above -92 dBm. When it is determined at 904 that the power level of the signal is above the threshold energy level, the method 900 proceeds from 904 to 906. When it is determined at 904 that the power level of the signal is not above the threshold energy level, the method 900 proceeds from 904 to 918.

At 906, the system 100 transforms the signal from the time domain to the frequency domain. The method 900 proceeds from 906 to 908. At 908, the system 100 calculates the power spectral density of the modulated sidebands of the signal in the frequency domain. This may be done, for example, by averaging the power over a selected range of frequencies. The method 900 proceeds from 908 to 910.

At 910, the system 100 estimates the power spectral density of the noise of the interrogator. This may be done, for example, by using a look-up table. The values stored in the look-up table may be determined by measuring the power spectral density without any signal present. In another example, this may be done by averaging the power over a selected range of frequencies where no signal is present. The method proceeds from 910 to 912. At 912, the system 100 calculates the ratio of the power spectral density of the signal to the estimated power spectral density of the noise of the signal. The method 900 proceeds from 912 to 914.

At 914, the system 100 determines whether the ratio of the power spectral density of the signal to the estimated power spectral density of the noise is consistent with a RFID signal. This may be done, for example, by using a look-up table. When it is determined at 914 that the ratio of the power spectral density of the signal to the estimated power spectral density of the noise is consistent with a RFID signal, the method proceeds from 914 to 916, where the system 100 returns an indication that the signal is an RFID signal and the method 900 terminates. When it is determined at 914 that the ratio of the power spectral density of the signal to the estimated power spectral density of the noise is not consistent with an RFID signal, the method 900 proceeds from 914 to 918, where the system 100 returns an indication that the signal is not an RFID signal or is indeterminate and the method 900 terminates.

Embodiments of the methods illustrated in Figures 5 through 9 may be advantageously employed to permit an RFID system, such as the RFID system 100 illustrated in Figure 1, to operate in a frequency channel even if there is a signal present in the frequency channel that exceeds a conventional interference power limit. For example, interference is typically more likely to occur at lower power levels between an interrogator, which would typically employ amplitude modulation, and a device employing angular modulation. Thus, a higher, or no, threshold power level may be employed if the signal is determined to be using amplitude modulation. In another example, if a signal is determined to be from another interrogator, it may be known that interference is unlikely at any power level between the two interrogators. Thus, transmission may simply be enabled if it is determined that the signal is from another interrogator or from a particular type of interrogator.

Embodiments of the methods illustrated in Figures 5 through 9 may also be advantageously employed to determine whether interference with signals in other frequency channels is likely to cause interference. For example, if a signal is determined to be from another interrogator and in an adjacent channel, interference maybe likely above certain power levels. In another example, interference may be likely with a signal in channels within a particular frequency range and above another threshold level. Embodiments of the methods illustrated in Figures 5 through 9 may be employed to disable transmission in a selected frequency when such interference is likely to occur.

Embodiments of the method discussed in Figures 5 through 9 may contain additional acts not shown in Figures 5 through 9, may not contain all of the acts shown in Figures 5 through 9, may perform acts shown in Figures 5 through 9 in various orders, and may combine acts shown in Figures 5 through 9. For example, the embodiment illustrated in Figure 7 may be modified to combine acts 706 and 712. In another example, the embodiment illustrated in Figure 9 may employ a single look-up table and combine acts 910 through 914. In another example, the embodiments illustrated in Figures 5 through 9 may be modified to determine whether other criteria are satisfied before setting an indication that the selected channel may be used by the interrogator 104. In another example, the embodiments illustrated in Figures 5 through 9 may be modified to perform error processing in the event the system 100 is unable to determine the nature of a signal, for example, error processing may be performed if the modulation type of a signal present in the selected frequency channel cannot be determined, or if the signal to noise ratio of a signal cannot be determined. In another example, the embodiments of Figures 5 through 9 could be modified to check multiple potential frequency channels and set an indication of which of the multiple frequency channels were available for use by the interrogator 104. In another example, the embodiments of Figures 5 through 9 could be modified to sequentially check potential frequency channels until an available channel is identified. In another example, the embodiments of Figures 5 through 9 could be modified to periodically check the availability of a potential frequency channel.

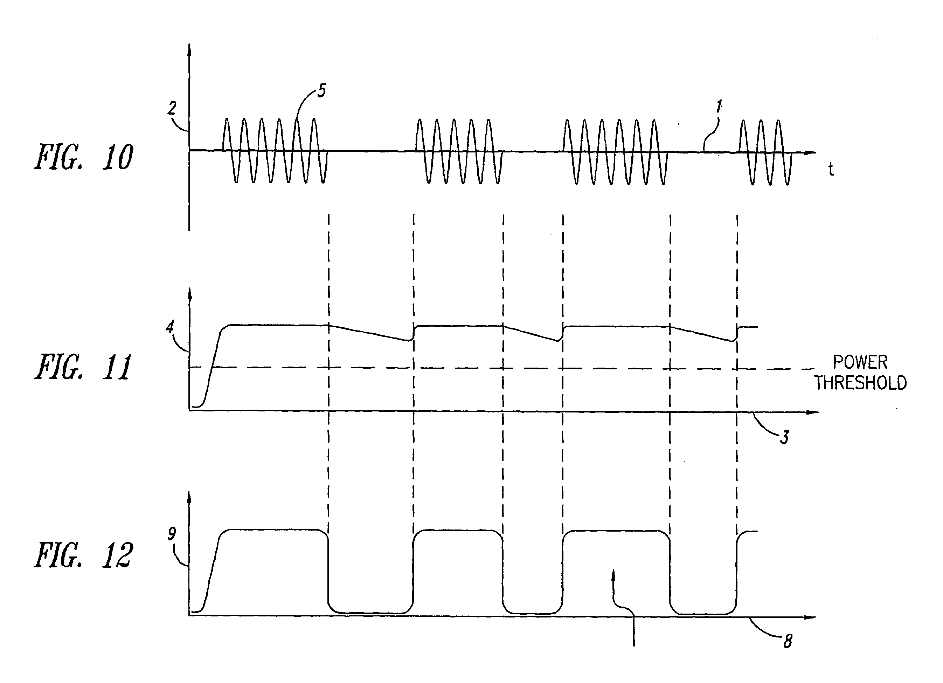

Figure 10 is a graphical representation of an amplitude modulated radio-frequency signal 5. The horizontal axis 1 represents time and the vertical axis 2 represents amplitude. The amplitude of the signal 5 is modulated to transmit the desired data. Figure 11 is a graphical representation of the power strength of the signal 5 illustrated in Figure 10. The horizontal axis 3 represents time and the vertical axis 4 represents power strength. Figure 12 is a graphical representation of a signal indicating amplitude modulation is present in the signal illustrated in Figure 10. The horizontal axis 8 represents time and the vertical axis 9 represents a signal level.

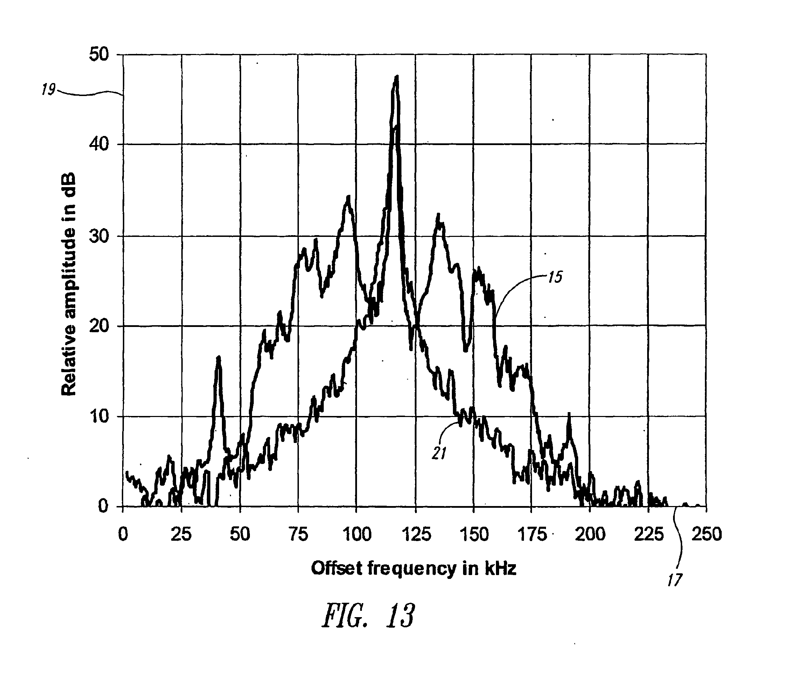

Figure 13 illustrates a received signal 15 from an interrogator at a -30 dBm power level. The horizontal axis 17 represents the offset frequency in kHz and the vertical axis 19 represents the relative amplitude in dB. For comparison, an unmodulated signal 21 from an interrogator is illustrated.

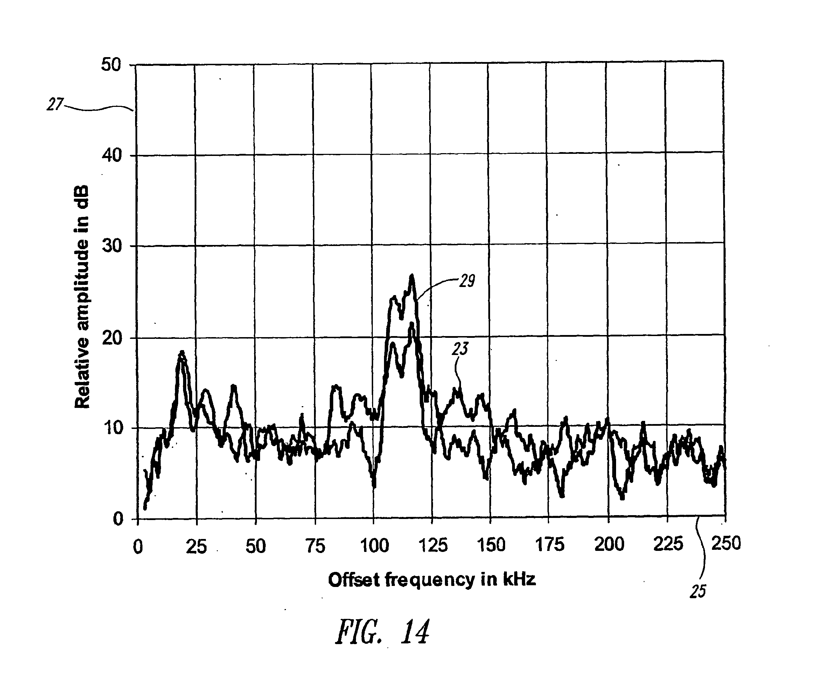

Figure 14 illustrates a received signal 23 from an interrogator at a -90 dBm power level. The horizontal axis 25 represents the offset frequency in kHz and the vertical axis 27 represents the relative amplitude in dB. For comparison, an unmodulated signal 29 from an interrogator is illustrated. Thus, it can be seen that it is more difficult to determine whether the modulation characteristics of a signal are consistent with a signal from an interrogator at lower power levels.

The term "computer-readable medium" as used herein refers to any medium that participates in providing instructions to a system or a processor for execution. Such a medium may take many forms, including but not limited to, non-volatile media, volatile media, and transmission media. Non-volatile media includes, for example, hard, optical or magnetic disks. Volatile media includes dynamic memory. Transmission media includes coaxial cables, copper wire and fiber optics. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, EPROM and an EEPROM, a FLASH-EEPROM, any other memory chip or cartridge, a carrier wave, or any other medium from which a computer can read.

Various forms of computer readable media may be involved in carrying one or more sequences of one or more instructions to a processor for execution. For example, the instructions may initially be carried on a magnetic disk of a remote computer. The remote computer can load the instructions into its dynamic memory and send the instructions over a telephone line using a modem. A modem local to computer system can receive the data on the telephone line and use an infrared transmitter to convert the data to an infrared signal. An infrared detector coupled to a system bus can receive the data carried in the infrared signal and place the data on system bus. The system bus carries the data to system memory, from which a processor retrieves and executes the instructions. The instructions received by system memory may optionally be stored on storage device either before or after execution by the processor.

These and other changes can be made to the invention In light of the above-detailed description. In general, in the following claims, the terms used should not be construed to limit the invention to the specific embodiments disclosed in the specification and the claims. Accordingly, the invention is not limited by the disclosure, but instead its scope is to be determined entirely by the following claims.

## Claims

1. A radio-frequency interrogator (104), comprising:
a transceiver (127) configured to receive and transmit radio-frequency signals and
a control system (132) coupled to the transceiver (127) and configured to determine a nature of a signal present in a first frequency channel,
**characterized In that**
the control system (132) is further configured to:
determine a power level of the signal present in the first frequency channel;
compare the determined power level to a first threshold power level; and
selectively enable transmission of an interrogation signal (514) based on a comparison result and the determined nature of the signal (512).

2. The radio-frequency interrogator (104) of claim 1, wherein the control system (132) is further configured to:
compare the determined power level to a second threshold power level lower than the first threshold power level; and
selectively enable transmission of the interrogation signal (508) based on a
comparison result (506) of the determined power level to the second threshold power level

3. The radio-frequency interrogator (104) of claim 1 or 2, wherein the control system (132) is configured to determine the nature of the signal by determining a modulation scheme employed by the signal.

4. The radio-frequency interrogator (104) of claim 1 or 2, wherein the control system (132) determines the nature of the signal by a signal type identifier (228).

5. The radio-frequency interrogator (104) of claim 4, wherein the control system (132) determines the power level of the signal by a power detector (214) configured to detect the power level of the signal present in the first frequency channel.

6. The radio-frequency interrogator (104) of claim 1 or 2, wherein the control system (132) further comprises:
an analog to digital converter (312) configured to convert the signal present in the first frequency channel into a digital signal; and
a digital signal processor (318) configured to determine the nature of the signal present in the first frequency channel by analyzing the digital signal.

7. The radio-frequency interrogator (104) of claim 1 or 2, wherein the control system (132) is configured to enable transmission of the interrogation signal in a different channel.

8. The radio-frequency interrogator (104) of claim 1 or 2, wherein the control system (132) is further configured to:
analyze a signal in a second frequency channel; and
selectively enable transmission of the interrogation signal in the first frequency channel based at least in part on the analysis of the signal in the second frequency channel.

9. The radio-frequency interrogator (104) of claim 8; wherein the control system (132) is configured to analyze the signal in the second frequency channel by comparing the power level of the signal in the second frequency channel to a threshold power level.

10. The radio-frequency interrogator (104) of claim 8 wherein the control system (132) is configured to analyze the signal In the second frequency channel by determining whether the signal in the second frequency channel is an interrogation signal.

11. A radio-frequency identification system, comprising:
a radio-frequency identification tag (102); and
an interrogator (104) according to any of claims 1 to 10.

12. The radio-frequency identification system of claim 11, further comprising a second interrogator (104).

13. A method of determining whether a first interrogation channel is available for use by a radio-frequency interrogator (104), the method comprising:
receiving a radio-frequency signal in a first frequency channel; and
determining (510) a nature of the received signal,
**characterized by**
determining (504) a power level of the signal in the first frequency channel;
comparing (512) the determined power level of the signal to a threshold power level;
and
selectively enabling (514) transmission of an interrogation signal based on a comparison result and the determined nature of the signal in the first frequency channel.

14. The method of claim 13, further comprising comparing the determined power level to a second threshold power level lower than the first power threshold level
wherein the transmission of the interrogation signal is selectively enabled (508) based on a comparison result (506) the determined power level to the
second threshold power level.

15. The method of claim 13 or 14, wherein the step of determining the nature of the received signal comprises determining a modulation scheme employed by the signal.

16. The method of claim 13 or 14, further comprising the step of enabling transmission of the interrogation signal in a different channel.

17. The method of claim 13 or 14, further comprising the steps of
analyzing a signal in a second frequency channel; and
selectively enabling transmission of the interrogation signal in the first frequency channel based at least in part on the analysis of the signal in the second frequency channel.

18. The method of claim 17, wherein the step of analyzing the signal in the second frequency channel comprises comparing the power level of the signal in the second frequency channel to a threshold power level.

19. The method of claim 17, wherein the step of analyzing the signal in the second frequency channel comprises determining whether the signal in the second frequency channel is an interrogation signal.

## Patentansprüche

1. Radiofrequenzabfrageeinrichtung (104), umfassend:
einen Transceiver (127), der dazu eingerichtet ist, Radiofrequenzsignale zu empfangen und zu übertragen, und
ein Steuersystem (132), das mit dem Transceiver (127) gekoppelt ist und dazu eingerichtet ist, eine Natur eines in einem ersten Frequenzkanal vorhandenen Signals zu ermitteln,
**dadurch gekennzeichnet, dass**
das Steuersystem einer (132) des Weiteren dazu eingerichtet ist, um:
einen Leistungspegel des in dem ersten Frequenzkanal vorhandenen Signals zu ermitteln;
den ermittelten Leistungspegel mit einem ersten Schwellenleistungspegel zu vergleichen;
und
eine Übertragung eines Abfragesignals (514) auf Basis eines Vergleichsergebnisses und der ermittelten Natur des Signals (512) selektiv freizugeben.

2. Radiofrequenzabfrageeinrichtung (104) nach Anspruch 1, wobei das Steuersystem (132) des Weiteren dazu eingerichtet ist, um:
den ermittelten Leistungspegel mit einem zweiten Schwellenleistungspegel zu vergleichen, der niedriger ist, als der erste Schwellenleistungspegel; und
die Übertragung des Abfragesignals (508) auf Basis eines Vergleichsergebnisses (506) des ermittelten Leistungspegels mit dem zweiten Schwellenleistungspegel selektiv freizugeben.

3. Radiofrequenzabfragevorrichtung (104) nach Anspruch 1 oder 2, wobei das Steuersystem (132) des Weiteren dazu eingerichtet ist, die Natur des Signals durch eine Bestimmung eines von dem Signal verwendeten Modulationsschemas zu ermitteln.

4. Radiofrequenzabfragevorrichtung (104) nach Anspruch 1 oder 2, wobei das Steuersystem (132) die Natur des Signals durch einen Signalartermittler (228) ermittelt.

5. Radiofrequenzabfragevorrichtung (104) nach Anspruch 4, wobei das Steuersystem (132) den Leistungspegel des Signals durch einen Leistungsdetektor (214) ermittelt, der dazu eingerichtet ist, den Leistungspegel des in dem ersten Frequenzkanal vorhandenen Signals zu ermitteln.

6. Radiofrequenzabfragevorrichtung (104) nach Anspruch 1 oder 2, wobei das Steuersystem (132) des Weiteren umfasst:
einen Analogdigitalwandler (312), der dazu eingerichtet ist, das in dem ersten Frequenzkanal vorhandene Signal in ein Digitalsignal umzuwandeln; und
einen digitalen Signalprozessor (318), der dazu eingerichtet ist, die Natur des in dem ersten Frequenzkanal vorhandenen Signals durch Analyse des digitalen Signals zu ermitteln.

7. Radiofrequenzabfragevorrichtung (104) nach Anspruch 1 oder 2, wobei das Steuersystem (132) dazu eingerichtet ist, die Übertragung des Abfragesignals in einem anderen Kanal freizugeben.

8. Radiofrequenzabfragevorrichtung (104) nach Anspruch 1 oder 2, wobei das Steuersystem (132) des Weiteren dazu eingerichtet ist, um:
ein Signal in einem zweiten Frequenzkanal zu analysieren; und
die Übertragung des Abfragesignals in dem ersten Frequenzkanal zumindest zum Teil auf Basis der Analyse des Signals in dem zweiten Frequenzkanal selektiv freizugeben.

9. Radiofrequenzabfragevorrichtung (104) nach Anspruch 8, wobei das Steuersystem (132) dazu eingerichtet ist, das Signal in dem zweiten Frequenzkanal durch Vergleichen des Leistungspegels des Signals in dem zweiten Frequenzkanal mit einem Schwellenleistungspegel zu analysieren.

10. Radiofrequenzabfragevorrichtung (104) nach Anspruch 8, wobei das Steuersystem (132) dazu eingerichtet ist, das Signal in dem zweiten Frequenzkanal durch Feststellen, ob das Signal in dem zweiten Frequenzkanal ein Abfragesignal ist, zu analysieren.

11. Radiofrequenzidentifikationssystem:
ein Radiofrequenzidentifikationskennzeichen (102); und
eine Abfragevorrichtung (104) nach einem der Ansprüche 1 bis 10.

12. Radiofrequenzidentifkationssystem nach Anspruch 11, des Weiteren umfassend eine zweite Abfragevorrichtung (104).

13. Verfahren zur Bestimmung, ob ein erster Abfragekanal zur Verwendung durch eine Radiofrequenzabfragevorrichtung (104) zur Verfügung steht, mit den Schritten:
Empfangen eines Radiofrequenzsignals in einem ersten Frequenzkanal; und
Ermitteln (510) einer Natur des empfangenen Signals,
**gekennzeichnet durch**
Ermitteln (504) eines Leistungspegels des Signals in dem ersten Frequenzkanal;
Vergleichen (512) des ermittelten Leistungspegels des Signals mit einem Schwellenleistungspegel; und
selektiv Freigeben (514) der Übertragung eines Abfragesignals auf Basis eines Vergleichsergebnisses und der ermittelten Natur des Signals in dem ersten Frequenzkanal.

14. Verfahren nach Anspruch 13, des Weiteren umfassend:
Vergleichen des ermittelten Leistungspegels mit einem zweiten Schwellenleistungspegel, der niedriger ist, als der erste Schwellenleistungspegel,
wobei die Übertragung des Abfragesignals auf Basis eines Vergleichsergebnisses (506) des ermittelten Leistungspegels mit dem zweiten Schwellenleistungspegel selektiv freigegeben wird (508).

15. Verfahren nach Anspruch 13 oder 14, wobei der Schritt der Ermittlung der Natur des empfangenen Signals eine Bestimmung eines von dem Signal verwendeten Modulationsschemas umfasst.

16. Verfahren nach Anspruch 13 oder 14, des Weiteren umfassend den Schritt der Freigabe der Übertragung des Abfragesignals in einem anderen Kanal.

17. Verfahren nach Anspruch 13 oder 14, des Weiteren umfassend die Schritte:
Analysieren eines Signals in einem zweiten Frequenzkanal; und
selektiv Freigeben der Übertragung des Abfragesignals in dem ersten Frequenzkanal zumindest zum Teil auf Basis der Analyse des Signals in dem zweiten Frequenzkanal.

18. Verfahren nach Anspruch 17, wobei der Schritt der Analyse des Signals in dem zweiten Frequenzkanal ein Vergleichen des Leistungspegels des Signals in dem zweiten Frequenzkanal mit einem Schwellenleistungspegel umfasst.

19. Verfahren nach Anspruch 17, wobei der Schritt des Analysierens des Signals in dem zweiten Frequenzkanal eine Bestimmung umfasst, ob das Signal in dem zweiten Frequenzsignal ein Abfragesignal ist.

## Revendications

1. Interrogateur radiofréquence (104), comprenant :
un émetteur-récepteur (127) configuré pour recevoir et émettre des signaux de radiofréquence, et
un système de commande (132) couplé à l'émetteur-récepteur (127) et configuré pour déterminer une nature d'un signal présent dans un premier canal de fréquences,
**caractérisé en ce que**
le système de commande (132) est en outre configuré pour :
déterminer un niveau de puissance du signal présent dans le premier canal de fréquences ;
comparer le niveau de puissance déterminé à un premier niveau de puissance de seuil ; et
valider de manière sélective l'émission d'un signal d'interrogation (514) en se basant sur un résultat de comparaison et sur la nature déterminée du signal (512).

2. Interrogateur radiofréquence (104) selon la revendication 1, dans lequel le système de commande (132) est en outre configuré pour :
comparer le niveau de puissance déterminé à un second niveau de puissance de seuil inférieur au premier niveau de puissance de seuil ; et
valider de manière sélective l'émission du signal d'interrogation (508) en se basant sur un résultat de comparaison (506) du niveau de puissance déterminé au second niveau de puissance de seuil.

3. Interrogateur radiofréquence (104) selon la revendication 1 ou 2, dans lequel le système de commande (132) est configuré pour déterminer la nature du signal en déterminant un système de modulation utilisé par le signal.

4. Interrogateur radiofréquence (104) selon la revendication 1 ou 2, dans lequel le système de commande (132) détermine la nature du signal par un identificateur de type de signal (228).

5. Interrogateur radiofréquence (104) selon la revendication 4, dans lequel le système de commande (132) détermine le niveau de puissance du signal par un détecteur de puissance (214) configuré pour détecter le niveau de puissance du signal présent dans le premier canal de fréquences.

6. Interrogateur radiofréquence (104) selon la revendication 1 ou 2, dans lequel le système de commande (132) comprend en outre :
un convertisseur analogique - numérique (312) configuré pour transformer le signal présent dans le premier canal de fréquences en un signal numérique ; et
un processeur de signal numérique (318) configuré pour déterminer la nature du signal présent dans le premier canal de fréquences en analysant le signal numérique.

7. Interrogateur radiofréquence (104) selon la revendication 1 ou 2, dans lequel le système de commande (132) est configuré pour valider l'émission du signal d'interrogation dans un canal différent.

8. Interrogateur radiofréquence (104) selon la revendication 1 ou 2, dans lequel le système de commande (132) est en outre configuré pour :
analyser un signal dans un second canal de fréquences ; et
valider de manière sélective l'émission du signal d'interrogation dans le premier canal de fréquences en se basant au moins en partie sur l'analyse du signal dans le second canal de fréquences.

9. Interrogateur radiofréquence (104) selon la revendication 8, dans lequel le système de commande (132) est configuré pour analyser le signal dans le second canal de fréquences en comparant le niveau de puissance du signal dans le second canal de fréquences à un niveau de puissance de seuil.

10. Interrogateur radiofréquence (104) selon la revendication 8, dans lequel le système de commande (132) est configuré pour analyser le signal dans le second canal de fréquences en déterminant si le signal dans le second canal de fréquences est un signal d'interrogation.

11. Système d'identification par radiofréquence, comprenant :
une étiquette d'identification par radiofréquence (102) ; et
un interrogateur (104) selon l'une quelconque des revendications 1 à 10.

12. Système d'identification par radiofréquence selon la revendication 11, comprenant en outre un second interrogateur (104).

13. Procédé de détermination si un premier canal d'interrogation est disponible pour utilisation par un interrogateur radiofréquence (104), le procédé comprenant :
la réception d'un signal de radiofréquence dans un premier canal de fréquences ; et
la détermination (510) d'une nature du signal reçu,
**caractérisé par**
la détermination (504) d'un niveau de puissance du signal dans le premier canal de fréquences ;
la comparaison (512) du niveau de puissance déterminé du signal à un niveau de puissance de seuil ;
et
la validation sélective (514) de l'émission d'un signal d'interrogation en se basant sur un résultat de comparaison et sur la nature déterminée du signal dans le premier canal de fréquences.

14. Procédé selon la revendication 13, comprenant en outre la comparaison du niveau de puissance déterminé à un second niveau de puissance de seuil inférieur au premier niveau de puissance de seuil,
dans lequel l'émission du signal d'interrogation est validée de manière sélective (508) en se basant sur un résultat de comparaison (506) du niveau de puissance déterminé au second niveau de puissance de seuil.

15. Procédé selon la revendication 13 ou 14, dans lequel l'étape de détermination de la nature du signal reçu comprend la détermination d'un système de modulation utilisé par le signal.

16. Procédé selon la revendication 13 ou 14, comprenant en outre l'étape de validation de l'émission du signal d'interrogation dans un canal différent.

17. Procédé selon la revendication 13 ou 14, comprenant en outre les étapes :
d'analyse d'un signal dans un second canal de fréquences ; et
de validation sélective de l'émission du signal d'interrogation dans le premier canal de fréquences en se basant au moins en partie sur l'analyse du signal dans le second canal de fréquences.

18. Procédé selon la revendication 17, dans lequel l'étape d'analyse du signal dans le second canal de fréquences comprend la comparaison du niveau de puissance du signal dans le second canal de fréquences à un niveau de puissance de seuil.

19. Procédé selon la revendication 17, dans lequel l'étape d'analyse du signal dans le second canal de fréquences comprend la détermination si le signal dans le second canal de fréquences est un signal d'interrogation.
